# EUROPÄISCHE PATENTSCHRIFT

(11) **EP 0 300 126 B1**
(45) Veröffentlichungstag und Bekanntmachung des Hinweises auf die Patenterteilung: **15.06.1994**
(21) Anmeldenummer: 88103299.9
(22) Anmeldetag: 11.11.1981
(51) Int. Cl.: H02K 29/06, B60L 11/16

(54) **Fahrzeug mit Verbrennungsmotor, Generator und Antriebs-Elektromotor**
Vehicle with internal combustion motor, generator and electrical drive motor
Véhicule avec moteur à combustion interne, générateur et moteur d'entraînement électrique

(30) Priorität: 11.11.1980 DE 8030107 U
(43) Veröffentlichungstag der Anmeldung: 25.01.1989
(62) Teilanmeldung aus: 81109637.9
(73) Patentinhaber: Heidelberg, Götz, Dipl.-Phys., D-82319 Starnberg (DE)
(72) Erfinder: Heidelberg, Götz, Dipl.-Phys., D 8136 Percha (DE); Gründl, Andreas, D-8000 München 70 (DE); Rosner, Peter, Dr., D-8000 München 2 (DE)
(74) Vertreter: Klunker . Schmitt-Nilson . Hirsch

(56) Entgegenhaltungen:
- DE-A- 1 613 758
- DE-A- 2 123 831
- DE-A- 2 436 546

## Beschreibung

Die Erfindung bezieht sich auf ein Fahrzeug mit
- einem Verbrennungsmotor;
- einem von dem Verbrennungsmotor antreibbaren Generator;
- mindestens einem Antriebs-Elektromotor; und
- einem Rotationsenergiespeicher zur Spitzenbedarfsdeckung.

Ein Fahrzeug dieser Art ist aus dem Dokument DE-A-24 36 546 bekannt. Bei dem bekannten Fahrzeug ist der Verbrennungsmotor mit dem Antriebs-Elektromotor sowie dem Rotationsenergiespeicher mechanisch gekoppelt; der Rotationsenergiespeicher und der Generator sind ebenfalls mechanisch gekoppelt. Dem Rotationsenergiespeicher wird Energie zugeführt oder entnommen ausschließlich in Form mechanischer Rotationsenergie.

Demgegenüber ist das erfindungsgemäße Fahrzeug dadurch gekennzeichnet,
a) daß der Rotationsenergiespeicher so aufgebaut ist, daß seine Drehzahl durch Zufuhr elektrischer Energie erhöhbar und durch Entnahme elektrischer Energie erniedrigbar ist;
b) daß der Rotationsenergiespeicher elektrisch mit dem Generator und dem mindestens einen Antriebs-Elektromotor verbunden ist; und
c) daß der Antriebs-Elektromotor und/oder der Rotationsenergiespeicher jeweils aufweist:
   - einen mit Stromleitern versehenen Stator und einen mit Dauermagneten versehenen Läufer, die mit einem Spaltabstand zwischen sich angeordnet sind,
   - mindestens einen, am Stator vorgesehenen Sensor, der die Relativstellung von Stator und Läufer erfaßt,
   - eine von dem Sensor gesteuerte elektronische Schalteinrichtung, die bei antriebsgerechter beziehungsweise generatorgerechter Relativstellung von Stator und Läufer eine elektrische Verbindung zwischen den Stromleitern und einer Stromquelle beziehungsweise Stromsenke herstellt.

Elektromotoren mit den vorstehend unter c) aufgeführten Merkmalen sind an sich bekannt (z.B. DE-A-16 13 758).

Nachfolgend wird der Kürze halber von "Antrieb" statt von "Antriebs-Elektromotor" gesprochen.

Die von dem Sensor gesteuerte elektronische Schalteinrichtung sorgt selbsttätig dafür, daß bei passenden Relativstellungen von Stator und Läufer den Leitern Strom zugeführt oder von den Leitern Strom abgeführt wird. Die Leiter sind in den meisten Fällen in Form von Spulen und Wicklungen vorgesehen.

Die verwendeten Begriffe "Stator" und "Läufer" sollen nicht bedeuten, daß der Stator unbedingt der unbewegt bleibende Teil des Antriebs oder des Generators und der Läufer unbedingt der sich bewegende Teil des Antriebs oder des Generators ist. Vielmehr sind beide Möglichkeiten, also sich bewegender Stator mit unbewegt bleibendem Läufer und unbewegt bleibender Stator mit sich bewegendem Läufer, ausführbar, sogar die Möglichkeit, daß sich sowohl Stator als auch Läufer mit unterschiedlicher Geschwindigkeit bewegen. Der Fall des unbewegt bleibenden Stators ist jedoch bevorzugt, da diesem Strom zugeführt bzw. von diesem Strom abgeführt werden muß.

Eine Weiterbildung der Erfindung ist dadurch gekennzeichnet, daß der Bereich des Läufers, auf den der Sensor anspricht, gegenüber den Dauermagneten oder der Sensor gegenüber dem Stator in Richtung der Relativbewegung von Stator und Läufer verschiebbar ist. Dies gibt eine einfache Möglichkeit, die normale Antriebs- oder Generatorfunktion zu modifizieren, beispielsweise die Geschwindigkeit des Antriebs zu ändern, den Antrieb oder den Generator auszuschalten, von Antriebsfunktion auf Generatorfunktion umzuschalten und umgekehrt oder die Richtung des Antriebs bzw. die Stromrichtung des vom Generator gelieferten Stroms umzukehren.

Vorzugsweise verwendet man einen auf die funktionell sowieso vorgesehenen Dauermagnete oder auf gesondert zu diesem Zweck angeordnete Dauermagnete ansprechenden Sensor. Dies führt, besonders im erstgenannten Fall, zu einem einfach aufgebauten Antrieb oder Generator. Besonders bevorzugte Arten von Sensoren sind Hallsonden, Reedkontakte, Photozellen, Ultraschallsensoren, Gasstromsensoren, Induktionssensoren oder Permeabilitätssensoren.

Beim erfindungsgemäßen Antrieb ist bereits durch die in den Stromleitern induzierte Gegen-EMK eine Geschwindigkeitsbegrenzung und durch die Speisungsfrequenz und die Induktivität der Stromleiter eine Schubbegrenzung immanent. Vorzugsweise werden jedoch die Geschwindigkeit und/oder der Schub elektronisch begrenzt.

Die elektronische Schalteinrichtung kann eine Leistungssteuereinrichtung zur Steuerung der den Stromleitern zugeführten oder entnommenen elektrischen Leistung aufweisen, die vorzugsweise eine Impulsbreitensteuerschaltung, eine Phasenanschnittschaltung, eine Zwischentaktungsschaltung oder eine Direktumrichterschaltung ist. Als steuerbare Halbleiterschalter sind Thyristoren, insbesondere solche, die mit geringer Steuerleistung über die Gateelektrode sowohl ein- als auch ausschaltbar sind, und Triacs besonders bevorzugt.

Wegen zahlreicher Vorteile ist es besonders bevorzugt, den Stator in mehrere Abschnitte aufzuteilen, denen jeweils eine Schalteinrichtung zugeordnet ist. Vorzugsweise ist pro Statorabschnitt mindestens ein Sensor vorgesehen. Da pro Abschnitt von der jeweiligen Schalteinrichtung geringere Ströme bzw. Leistungen bewältigt werden müssen, kommt man mit Schalteinrichtungen kleinerer Leistung aus, wodurch deren Preis ganz wesentlich überproportional sinkt. Damit einher geht die Verringerung des Kühlaufwands für die Schalteinrichtungen, die Erhöhung der Redundanz bzw. Zuverlässigkeit, da der Ausfall einzelner Abschnitte die Gesamtfunktion nicht stört, und eine Vereinfachung der Wartung durch Austausch vergleichsweise billiger einzelner Schalteinrichtungen. Schließlich kommt man auch insgesamt in einen niedrigeren Spannungsbereich, da die Gegen-EMK pro Abschnitt klein bleibt und man sich in der vom Isolationsaufwand und damit vom Preisaufwand her günstigen VDE-Klasse bis 1000 V halten kann. Es ist also alles in allem sehr viel günstiger, statt eines einzigen oder weniger Abschnitte jeweils mit einer Schalteinrichtung die Zahl der Abschnitte und Schalteinrichtungen zu erhöhen und dafür eine größere Zahl von Schalteinrichtungen, die jedoch einzeln eine niedrigere Schaltleistung haben, vorzusehen. Im unteren Grenzfall besteht ein Statorabschnitt aus einem einzigen Stromleiterpaar bzw. einer einzigen Spule.

Man kann vorsehen, daß die Stromleiterverschaltung von Hintereinanderschaltung in Parallelschaltung und umgekehrt änderbar ist.

Eine besonders bevorzugte Ausgestaltung des erfindungsgemäßen Antriebs oder Generators ist dadurch gekennzeichnet, daß die Läufer-Polteilung, gemessen als Mittenabstand eines Paars benachbarter Dauermagnete, und die Stator-Polteilung, gemessen als Mittenabstand eines Statorpolpaares, das mit dem Dauermagnetpaar als magnetischer Kreis zusammenwirkt, unterschiedlich sind, und daß die Statorpolpaare einzeln oder in Gruppen, die entsprechende Funktions-Relativstellungen zu Dauermagnetpaaren haben, schaltbar sind. Auf diese Weise wird ein sicherer Anlauf erreicht, da es keine Relativstellung von Stator und Läufer gibt, bei der trotz eingeschalteten Stromleitern kein Schub erzeugt wird. Wegen der unterschiedlichen Polteilung am Stator und am Läufer kommt man zur Einzel-Einschaltung der Stromleiter für die einzelnen Statorpole bzw. Statorpaare. Wenn auf die Länge des Läufers an mehreren Stelle des Stators antriebsgerechte bzw. generatorgerechte Relativstellungen vorhanden sind, kann man diese Stelle gleichzeitig schalten.

Vorzugsweise sind die Statorpole längs der Relativbewegungsrichtung von Stator und Läufer in einem derartigen Abstand vorgesehen, daß nach Weiterbewegung des Läufers um im wesentlichen (Der Begriff "im wesentlichen" ist eingefügt, um den Fällen unterschiedlichen Polteilung an Stator und Läufer Rechnung zu tragen) eine Läufer-Polteilung die nächste Magnetkreis-Relativstellung erreicht wird. Diese sogenannte einphasige Auslegung hat insbesondere den Vorteil, daß die Anordnung der Stromleiter bzw. Spulen am Stator einfacher ist, insbesondere sogenannte Wickelköpfe mit sich überkreuzenden Stromleitern vermieden sind; das Versehen des Stators mit den Stromleitern ist dadurch montagegünstiger.

Vorzugsweise hat der Stator auf eine der Läuferlänge entsprechende Länge ein bis vier Statorpole mehr oder weniger als der Läufer.

Es ist ferner möglich, die Leiterverschaltung am Stator von Hintereinanderschaltung in Parallelschaltung und umgekehrt änderbar zu machen. Hierdurch ergibt sich eine ganze Reihe von Möglichkeiten, die Geschwindigkeit, die Leistung und die entnommene Frequenz beim erfindungsgemäßen Antrieb bzw. Generator zu beeinflussen.

Vorzugsweise sind die Stromleiter zum Bremsen kurzschließbar.

Vorzugsweise weist die jeweilige elektronische Schalteinrichtung zur Steuerung eines Antriebs-Elektromotors zusätzlich eine elektronische Einrichtung zur Verhinderung einer übermäßigen Differenz zwischen der Umfangsgeschwindigkeit des von dem betreffenden Elektromotor angetriebenen Rads und der Fahrgeschwindigkeit des Fahrzeugs auf. Hierdurch kann man insbesondere durch Begrenzung der Umfangsgeschwindigkeit des Antriebsrads ein Durchdrehen der Antriebsräder auf elektronische Weise verhindern oder auch bei mehreren Antriebsrädern einer Achse eine differentialsperrenähnliche Wirkung erzielen.

Vielradantrieb oder Allradantrieb ist bei der Erfindung auf einfachste Weise zu verwirklichen.

Der erfindungsgemäße Antrieb oder Generator ist hinsichtlich Drehmoment, Drehzahl und dgl. in weiten Bereichen mit vergleichsweise geringem Aufwand gut regelbar.

Dem Rotationsenergiespeicher kann man elektrische Leistung zuführen, die dann als Rotationsenergie mechanisch gespeichert wird, und man kann dem Rotationstenergiespeicher elektrische Energie entnehmen. Dabei besteht infolge der elektronischen Steuerung weitgehende Freiheit hinsichtlich der zugeführten und abgeführten Stromstärke und Frequenz.

Vorstehend ist auch dann, wenn an sich die Antriebsfunktion im Vordergrund stand, vielfach von "Antrieb oder Generator" gesprochen worden. Dies ist geschehen, um zu betonen, daß auch bei Antrieben eine Umschaltbarkeit auf Generatorfunktion zum Bremsen vorgesehen sein kann.

Bei der Erfindung werden bevorzugt hochkoerzitive Dauermagnete aus einem Element aus der Gruppe der seltenen Erden, insbesondere Samarium, und Kobalt verwendet. Solche Magnete erlauben es, mit vergleichsweise großen Spaltweiten zu arbeiten. Sie zeichnen sich ferner durch eine praktisch gerade Kennlinie im vierten Quadranten aus, wodurch sie gegen Spaltweitenänderungen und Gegenfelder, beispielsweise durch Elektromagnete, relativ unempfindlich sind.

Es wird darauf hingewiesen, daß der mindestens eine, beim erfindungsgemäßen Fahrzeug vorgesehene Antriebs-Elektromotor nicht in einem Fahrzeugrad integriert sein muß, wie bei einem nachfolgenden Ausführungsbeispiel geschildert. Vielmehr kann der Antriebs-Elektromotor in üblicher Weise neben dem betreffenden Fahrzeugrad angeordnet sein.

Die Erfindung wird im folgenden anhand schematisiert dargestellter Ausführungsbeispiele noch näher erläutert. Es zeigen:
- Fig. 1 bis 4: Ausführungsbeispiele rotatorischer Antriebe bzw. Generatoren, die mehrere grundsätzliche Konfigurationsmöglichkeiten veranschaulichen;
- Fig. 5: einen in ein Kraftfahrzeugrad integrierten Antrieb;
- Fig. 6: einen vertikalen Achsenschnitt durch einen Schwungradspeicher;
- Fig. 7: einen Querschnitt durch einen rotatorischen Antrieb oder Generator.

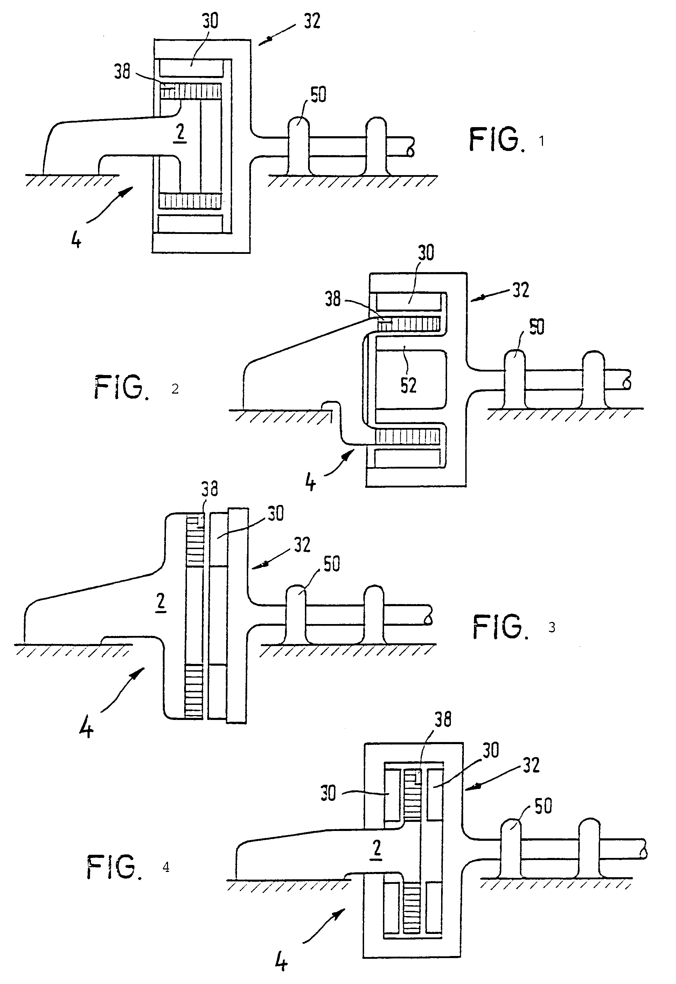

In den Fig. 1 bis 4 sind einige grundsätzliche Konfigurationen rotatorischer Antriebe oder Generatoren 4 nach dem Prinzip der Erfindung dargestellt. Der in diesen Figuren rechte Teil des jeweiligen Antriebs oder Generators 4 ist jeweils mit Lagern 50 drehbar gelagert und bildet den Läufer. Bei der Ausführungsform nach Fig. 1 ist der eigentliche Läuferbereich im wesentlichen becherförmig, wobei am Innenumfang des Bechers ringförmig Dauermagnete 30 mit wechselnder Polung ringförmig verteilt sind. Der Stator 2 hat die Form einer Walze, die am Außenumfang lamelliert ist, wobei die einzelnen Lamellen axial aneinandergepackt sind. Der Stator 2 trägt am Außenumfang axial verlaufende und zeichnerisch nicht dargestellte Stromleiter in geeigneter Teilung. Der Bereich des Läufers 32, an dem die Dauermagnete 30 befestigt sind, besteht aus ferromagnetischem Material als Rückschlußweg. Die Stromleiter können beispielsweise in axial verlaufende Nuten des Stators eingelegt sein.

Der Stator 2 trägt am Außenumfang eine oder ringförmig verteilt mehrere Hallsonden 38, die mit den Dauermageten 30 zusammenwirken. Sobald hallsondenseitig festgestellt wird, daß sich ein läuferseitiger Teil und ein statorseitiger Teil eines magnetischen Kreises oder mehrerer magnetischer Kreise in antriebsgerechter bzw. generatorgerechter Relativlage befinden, wird der Stromleiter bzw. die Spule oder werden die Stromleiter bzw. die Spulen dieses Kreises bzw. dieser Kreise selbsttätig eingeschaltet.

Der Statorring kann insgesamt von einer einzigen Schalteinrichtung geschaltet sein oder in mehrere Abschnitte mit jeweils einer Schalteinrichtung aufgeteilt sein, wobei ein Stromleiterpaar bzw. eine Spule den unteren Grenzfall eines Abschnittes darstellt. Weitere der in dieser Anmeldung offenbarten Merkmale der elektronischen Steuerung können vorhanden sein.

Die Ausführungsform nach Fig. 2 unterscheidet sich von der Ausführungsform nach Fig. 1 dadurch, daß der radial innerhalb des Ringes der Dauermagnete 30 angeordnete Statorbereich becherförmig in den Läufer hineinragt und daß radial innerhalb dieses Statorbereiches ein ringförmiger Vorsprung 52 des Läufers 32 unter Einhaltung eines geringen Luftspalts zum Statorring vorgesehen ist. Auf diese Weise ist der vorher auf den Stator 2 entfallende Teil der magnetischen Kreise hauptsächlich auf den Ringvorsprung 52 verlagert, der mit gleicher Drehzahl wie die Dauermagnete 30 rotiert. Auf diese Weise lassen sich die Wirbelstromverluste reduzieren. Der radial zwischen den Dauermagneten 30 und dem Ringvorsprung 52 befindliche Statorbereich kann auch in Form von sog. Lufstromleitern bzw. Luftspulen oder in Form von Stromleitern bzw. Spulen, deren Zwischenräume unter Freilassung der am Außenumfang und am Innenumfang liegenden Leiteroberflächen mit einer Vergußmasse der weiter vorn beschriebenen Art gefüllt sind, ausgebildet sein.

Die Ausführungsform nach Fig. 3 unterscheidet sich von der Ausführungsform nach Fig. 1 dadurch, daß der Läufer 32 als Scheibe ausgebildet ist und daß die Dauermagneten axial auf der den Lagern 50 abgewandten Stirnseite der Scheibe ringförmig verteilt angeordnet sind. Auch der Stator 2 ist scheibenförmig und trägt das Lamellenpaket und die nicht dargestellten Stromleiter auf seiner dem Läufer 32 zugewandten Stirnseite. Die einzelnen in Umfangsrichtung verlaufenden Lamellen des Lamellenpakets sind radial einander benachbart.

Die Ausführungsform nach Fig. 4 unterscheidet sich von der Ausführungsform nach Fig. 3 dadurch, daß der Läufer 32 zwei am Außenumfang miteinander verbundene Scheiben aufweist, zwischen denen sich der als Scheibe ausgebildete Stator befindet. Auf der den Lagern 50 abgewandten Scheibe des Läufers 32 kann entweder ein mitrotierender, magnetischer Rückschluß nach dem Prinzip der Ausführungsform gemäß Fig. 2 vorgesehen sein, oder es kann, wie zeichnerisch dargestellt, dort eine Reihe ringförmig verteilter Dauermagnete 30 stirnseitig angebracht sein. Im letzteren Fall wirkt also die Statorscheibe auf beiden Stirnseiten mit Dauermagneten 30 zusammen, so daß sich ein Ausgleich der axial wirkenden, magnetischen Anziehungskräfte ergibt. Die Ausführungsform gemäß Fig. 4 kann durch Hinzufügung weiterer Statorscheiben und Läuferscheiben erweitert werden. Der Statorbereich zwischen den beiden mit Dauermagneten 30 bestückten Läuferscheiben kann, wie bei der Ausführungsform nach Fig. 2 beschrieben, mit Luftstromleitern bzw. Luftspulen oder vergußmassegefüllten Leitern bzw. Spulen verwirklicht sein.

Bei den Ausführungsformen nach Fig. 1 bis 4 sind die Mittenabstände der Stromleiter des Stators 2 und die Mittenabstände der Dauermagneten 30, jeweils in Umfangsrichtung, zur Sicherstellung der Antriebs- bzw. Generatorfunktion aufeinander abgestimmt.

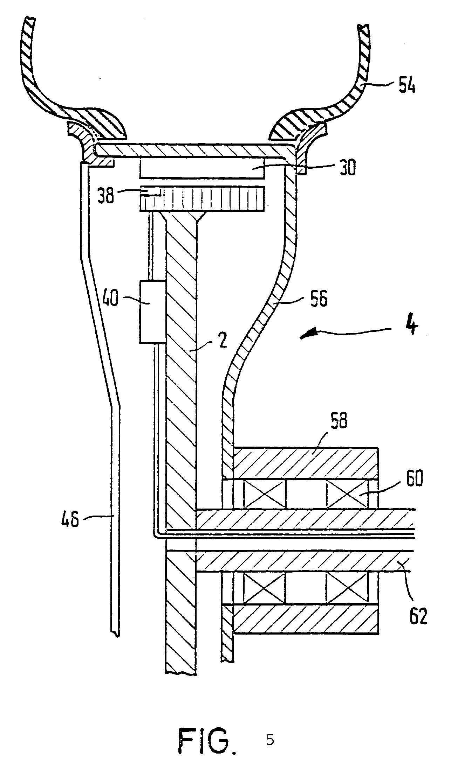

Bei der Ausführungsform nach Fig. 5 erkennt man die mit einem Reifen 54 ausgerüstete Felge 56 eines Kraftfahrzeugs. Die Felge 56 ist an eine Radnabe 58 stirnseitig angeschraubt. Die Radnabe 58 ist mit Hilfe von zwei Wälzlagern 60 auf einem hohlen Achsstummel 62 gelagert. Die Radnabe 58 kann auch als Bremstrommel ausgebildet sein.

Die Felge 56 hat insgesamt etwa schüsselförmige Gestalt, wobei der Rand der Schüssel auf eine Breite von einigen Zentimetern axial parallel zur Drehachse der Felge 56 verläuft. An diesem Rand ist über den Innenumfang ringförmig verteilt eine Reihe von Dauermagneten 30 angeordnet. An die freie Stirnseite des Achsstummels 62 ist ein im wesentlichen scheibenförmiger Stator 2 angeschraubt, der sich am Außenumfang axial verbreitert und dort, wie im Zusammenhang mit der Ausführungsform nach Fig. 1 genauer beschrieben, lamelliert ist. Auf diese konstruktiv extrem einfache Weise ist ein Antrieb 4 bzw. ein beim Bremsen des Fahrzeugs arbeitender Generator gebildet. Die elektronische Steuerung erfolgt, wie im Zusammenhang mit der Ausführungsform nach Fig. 1 genauer beschrieben, und kann weitere der in dieser Anmeldung offenbarten Merkmale aufweisen. Die Schalteinrichtung 40 ist an der äußeren Stirnfläche der Statorscheibe 2 befestigt. Die Stromzuleitung erfolgt durch den hohlen Achsstummel 62. Die an sich offene, nach außen weisende Stirnseite der Felge 56 ist durch eine Radkappe 46 abgeschlossen. Durch Abnehmen der Radkappe 46 ist der gesamte Antrieb bzw. Generator, insesondere die Schalteinrichtung 40, für Wartungsarbeiten bequem zugänglich.

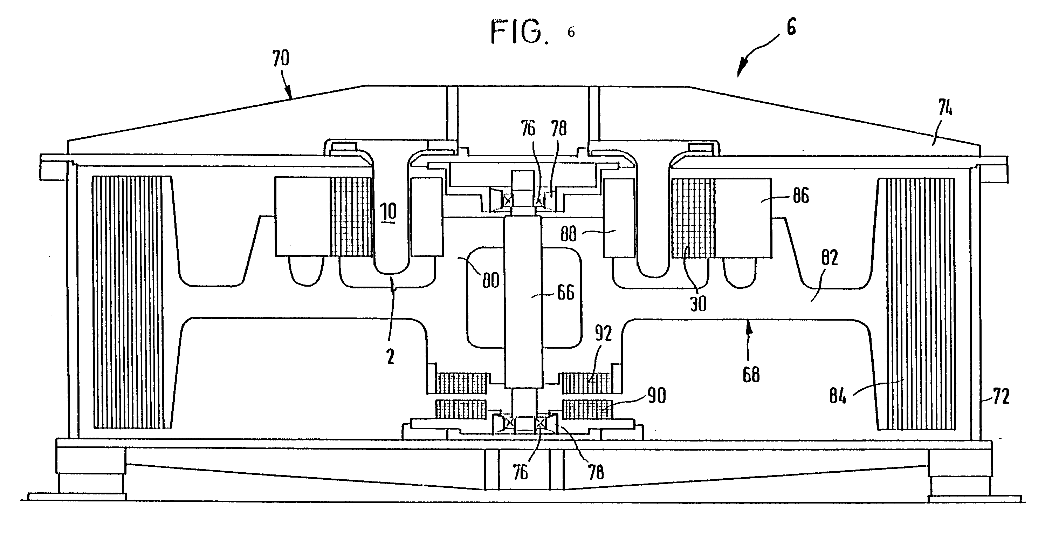

Fig. 6 zeigt einen Rotationsenergiespeicher 6 mit vertikaler Achse 66, mit der ein Schwungrad 68 rotieren kann. Das Schwungrad ist in einem evakuierten, druckfesten Gehäuse 70 angeordnet. Das Gehäuse 70 besteht aus einem topfförmigen Unterteil 72 und einem mit dem Unterteil 72 abgedichtet verschraubten, deckelartigen Oberteil 74. Die vertikale Achse 66 ist im Unterteil 72 sowie im Oberteil 74 mit Hilfe von Wälzlagern 76 gelagert, die ihrerseits über elastische Zwischenlagen 78 im jeweiligen Gehäuseteil aufgenommen sind.

Das Schwungrad 68 weist eine mit der Achse 66 verbundene Nabe 80, einen radial von dort nach außen führenden, scheibenartigen Bereich 82 sowie einen axial vergrößerten Schwungmassenbereich 84 auf. Die Schwungmasse 84 besteht sinnvollerweise aus einem spezifisch schweren Material, beispielsweise Stahl, wobei auch Wicklungen aus Stahlseilen mit Kunststoffüllung in Betracht kommen. Für das restliche Schwungrad 68 kommen neben Metall auch Kunststoffwerkstoffe insbesondere faserverstärkte Kunststoffwerkstoffe beispielsweise durch Glasfasern, Karbonfasern und dergleichen verstärkte Kunststoffwerkstoffe in Betracht.

Der Scheibenbereich 82 trägt auf seiner Oberseite einen Ring 86 aus ferromagnetischem Material. Am Innenumfang des Rings 86 ist eine Reihe von Dauermagneten 30 mit wechselnder Polung ringförmig vertielt angeordnet. Die Dauermagnete 30 werden also durch die Fliehkraft gegen den Ring 86 gepreßt. Radial innerhalb der Dauermagnete 30 unter Freilassung eines Ringspalts ragt vom Deckeloberteil 74 her nach unten ein Ring vertikaler Luftstromleiter 10 bzw. Luftspulen oder in der vorn beschriebenen Weise vergußmassengefüllter Leiter oder Spulen. Diese bilden den funktionellen Teil des Stators 2. Die Spulen haben je zwei vertikale Äste, die durch waagerechte, im wesentlichen ringförmig gekrümmte Äste miteinander verbunden sind. Radial innen von dem Ring von Stromleitern 10 oder Spulen befindet sich unter Freilassung eines Ringspalts und vom Scheibenbereich 82 getragen ein Rückschlußring 88. Auf diese Weise ist ein Antrieb und Generator gebildet, der im Prinzip wie die Ausführungsform nach Fig. 2 , allerdings mit vertikaler Drehachse, ausgebildet ist.

Die elektronische Steuerung erfolgt in der Art, wie anhand des Ausführungsbeispiels gemäß Fig. 1 näher erläutert, und kann weitere in dieser Anmeldung offenbarte Merkmale aufweisen.

Es können sozusagen zwei elektronische Steuerungen vorgesehen sein, nämlich eine für die "Antriebsfunktion" = Drehzahlerhöhung des Schwungrades 68 durch Zuführung elektrischerEnergie und eines für die "Generatorfunktion" = Drehzahlerniedrigung des Schwungrades 68 durch Abziehen elektrischer Energie. Auf diese Weise kann man also elektrische Energie synchron zur jeweiligen Drehzahl des Schwungrades 68 zuführen und kann dem Schwungradspeicher 6 elektrische Energie mit einer Frequenz entnehmen, die nicht notwendigerweise in einem festen Verhältnis zur Schwungraddrehzahl steht. Für viele Einsatzzwecke kann es aber auch ausreichen, die elektrische Energie einfach mit der gerade gegebenen Frequenz ohne elektronische Steuerung zu entnehmen und beispielsweise den gelieferten Wechselstrom gleichzurichten. Vorzugsweise ist die Auslegung so getroffen, daß der Stator 2 zwei getrennte Stromleitersysteme enthält, nämlich eines zur Stromzuführung und eines zur Stromentnahme. Bei einer solchen Auslegung ist es möglich, gleichzeitig dem Schwungradspeicher 6 elektrische Energie zuzuführen und ihm elektrische Energie zu entnehmen, wobei sich die Frequenzen des Speisungsstroms und des Entnahmestroms unterscheiden können. Außerdem kann man die Stromleitersysteme auf die Speisungs- und Entnahmefunktion gezielt auslegen,beispielsweise besonders niederohmige Entnahmewicklungen für kurzzeitige Entnahme von Strömen hoher Stromstärke vorsehen. Bei hohen Drehzahlen des Schwungrades 68 empfiehlt es sich, die Stromleiter in hochfrequenzgeeigneter Weise zur Vermeidung des Skineffektes vorzusehen.

Die vertikale Lagerung des Schwungrades 68 erfolgt durch abstoßende Dauermagnete. Zu diesem Zweck sind mehrere Dauermagnete 90 ringförmig verteilt am Boden des Gehäusesunterteils 72 angeordnet. Gegenüber diesen Dauermagneten 90 befinden sich mehrere Dauermagnete 92 ringförmig verteilt an der unteren Stirnfläche der Nabe 80. Eine Aufnahme des Gewichts des Schwungrades 68 durch anziehende Dauermagnete ist ebenfalls möglich. In der Dauermagnetlagerung kann man einen Präzessionsausgleich gegen die Erddrehungspräzession vorsehen. Statt der Radiallagerung mit Wälzlagern ist auch eine Lagerung mit Hilfe von Elektromagneten, die in ihrer Magnetkraft änderbar sind, durchführbar.

Die Radiallagerung erfolgt vorzugsweise überkritisch hinsichtlich möglicher radialer Schwingungen.

Man kann die Achse 66 als Hohlachse ausbilden und durch diese hindurch eine Druckstütze zwischen dem Gehäuseunterteil 72 und dem Gehäuseoberteil 74 vorsehen.

Insbesondere wenn das Schwungrad 68 axial weniger hoch ist als in Fig. 6 dargestellt, lassen sich für das Gehäuseunterteil 72 und das Gehäuseoberteil 74 vergleichsweise preisgünstig verfügbare Ronden aus dem Druckkesselbau einsetzen, die eine im wesentlichen schalenförmige Gestalt haben.

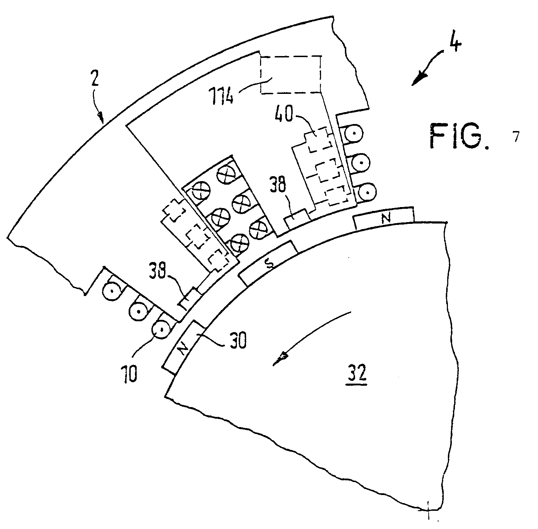

In Fig. 7 ist ein rotatorischer Antrieb 4 dargestellt, der nach dem in Fig. 1 beschriebenen Grundprinzip, allerdings mit radial innerhalb des Stators angeordnetem Läufer, aufgebaut ist. Der insgesamt zylindrische Stator 2 besteht aus einem axial zusammengefügten Paket von - grob gesprochen - ringförmigen Blechen aus ferromagnetischem Material. Der Stator 2 weist über den Innenumfang verteilt nach innen ragende Statorzähne 3 auf. Jeder Statorzahn 3 weist radial aufeinanderfolgend drei Spulen 10 auf. Jede Spule 10 besteht aus zwei Axialästen und zwei stirnseitigen, die Axialäste verbindenden Ästen. Jede Spule ist aus mehreren, voneinander isolierten Drähten gewickelt, in Fig. 7 jedoch als ein einziger, dicker Draht dargestellt.

Der innerhalb des Stators 2 rotierende Läufer 31 trägt an seinem Außenumfang ringförmig verteilt eine Reihe von in geradzahliger Anzahl vorgesehenen Dauermagneten 30 wechselnder Polung, die sich axial erstrecken. Aus weiter unten noch deutlicher werdenden Gründen sind die untereinander gleichen Abstände der Statorzähne 3, gemessen in Umfangsrichtung von Mitte zu Mitte, derart kleiner als die analog gemessenen Mittenabstände der Dauermagneten 30, daß ein oder zwei Polzähne 3 mehr als Dauermagnete 30 vorhanden sind.

An jedem Polzahn 3 ist eine auf die Dauermagneten 30, und zwar sowohl auf Nordpole als auch auf Südpole, ansprechende Hallsonde 38 vorgesehen. Stellt die Hallsonde 38 eine antriebsgerechte Relativstellung zwischen einem Dauermagneten 30 und dem dieser Hallsonde 38 zugeordneten Statorzahn 3 fest, werden eine, zwei oder alle drei Spulen 10 dieses Statorzahns 3 eingeschaltet. Die mit 40 angedeuteten Schalteinrichtungen können beispielsweise nach den Prinzipien arbeiten, wie sie bei einem vorhergehenden Ausführungsbeispiel genauer erläutert worden sind, allerdings in Abwandlung auf einphasige Auslegung, was den Aufbau sogar vereinfacht. Neuartig beim vorliegenden Ausführungsbeispiel ist jedoch, daß mit einem Steuerteil 114 Einfluß darauf genommen werden kann, ob alle drei Spulen 10 des betreffenden Statorzahns 3 eingeschaltet werden oder nur zwei Spulen 10 oder nur eine Spule 10. Wird dem Motor 4 ein hohes Drehmoment abverlangt, werden alle drei Spulen 10 eingeschaltet, bei niedrigerem verlangten Drehmoment weniger Spulen 10. Die Steuereinheit 114 kann zusätzlich die Funktion haben, die einzelnen Spulen 10 jedes Statorzahns 3 von Parallelschaltung in Reihenschaltung umzuschalten und umgekehrt. Diese kann auch bei der weiter unten beschriebenen Möglichkeit der gleichzeitigen Schaltung mehrerer Spulen an unterschiedlichen Umfangsstellen geschehen. Die Reihenschaltung empfiehlt sich bei kleiner Drehzahl und hohem Drehmoment, die Parallelschaltung bei hoher Drehzahl und kleinem Drehmoment.
Die Spulen 10 jedes Statorzahns 3 jeweils über eine eigene Schalteinrichtung 40 einzuschalten kann zum einen aus Gründen der Verkleinerung der Schaltleistung geschehen, was die in der Beschreibungseinleitung genannten Vorteile erbringt. Zum anderen ergeben sich zusammen mit der leicht unterschiedlichen Polteilung von Stator 2 und Läufer 32 die Vorteile eines sicheren Anlaufs, eines gleichmäßigeren Motorlaufs und einer gleichmäßigeren Netzbelastung.

Die Spulen 10 jedes Statorzahns werden,je nachdem ob sich ein Nordpol eines Dauermagneten 30 oder ein Südpol eines Dauermagneten 30 gegenüber dem Statorzahn 3 befindet, mit unterschiedlicher Stromrichtung eingeschaltet. Dies wird von den Schalteinrichtungen 40 gesteuert.

In praxi sind beim Betrieb immer Spulen 10 mehrerer benachbarter Statorzähne 3 eingeschaltet. Wenn die Polteilungsdifferenz zwischen Stator 2 und Läufer 32 relativ gering ist, sind zur gleichen Zeit sogar Spulen 10 nahezu aller Statorzähne 3 eingeschaltet. Die Spulen von in Umfangsrichtung benachbarten Statorzähnen 3 sind mit entgegengesetzter Stromrichtung beaufschlagt, wie in Fig. 7 angedeutet.

Bei der Ausführungsform gemäß Fig. 7 ist die sogenannte einphasige Auslegung verwirklicht: Wenn zwei in Umfangsrichtung benachbarte Dauermagnete 30 zwei Statorzähnen 3 gegenüberstehen, befindet sich zwischen diesen beiden Statorzähnen 3 kein weiterer Statorzahn. Aufgrund der einphasigen Auslegung gibt es keine sogenannten Wickelköpfe an den axialen Stirnseiten des Stators 2, an denen sich bei mehrphasiger Auslegung die Stromleiter der verschiedenen Phasen kreuzen. Vielmehr können die unter sich gleich ausgebildeten Spulen 10 ganz einfach auf die Statorzähne 3 aufgesteckt werden. Man kann jedoch das Ausführungsbeispiel gemäß Fig. 7 auch in Richtung mehrphasiger Auslegung abwandeln.

Es sei ferner ausdrücklich betont, daß sich das Ausführungsbeispiel der Fig. 7 auch dahingehend abwandeln läßt, daß pro Statorzahn nicht ein radial geschichtetes Paket von mehreren Spulen 10 vorhanden ist, sondern beispielsweise nur eine einzige Spule 10.

Wenn man über den Umfang zwei Statorzähne 3 mehr hat als Dauermagnetpole, dann tritt eine identische Relativstellung von Dauermagnetpolen und Statorzahnpolen immer gleichzeitig an zwei Stellen des Umfangs des Motors 4 auf. Man kann die Spulen dieser beiden Stellen mit einer einzigen Schalteinrichtung 40 zugleich schalten. Analoges gilt für größere Differenzen in der Zahl der Statorzähne 3 und der Dauermagneten 30.

Statt einer einzigen Hallsonde 38,die sowohl auf magnetische Nordpole als auch auf magnetische Südpole anspricht, kann man auch axial nebeneinander zwei Hallsonden vorsehen, von denen die eine nur auf Nordpole anspricht und die andere nur auf Südpole.

Das Ausführungsbeispiel der Fig. 7 kann auch dahingehend abgewandelt werden, daß man die Dauermagneten 30 am Innenumfang eines im wesentlichen zylindrischen, gehäuseartigen Teils anbringt und die Statorzähne 3 am Außenumfang eines im Inneren rotierenden Teils, so daß der Stator 2 rotiert, während der Läufer 32 stillsteht. Dies hat zwar den gewissen Nachteil, daß man die Zuführung oder Abnahme elektrischer Energie zu bzw. von einem rotierenden Teil vornehmen muß. Andererseits unterliegt jedoch die Befestigung der Dauermagnete 30 nicht mehr der Fliehkraft, was insbesondere bei größeren Dauermagneten 30 einen ganz wesentlichen Vorteil darstellt. Ferner rückt der Luftspalt zwischen den Dauermagneten 30 und den Polflächen der Statorzähne 3 bei gegebenem Außenumfang der Vorrichtung weiter nach außen, weil die Dauermagnete 30 radial weniger Platz beanspruchen als der Stator 2. Da die magnetische Umfangskraft an einem größeren Radius wirkt, ergibt sich dadurch ein höheres Drehmoment des Motors 4.

## Patentansprüche

1. Fahrzeug mit
- einem Verbrennungsmotor;
- einem von dem Verbrennungsmotor antreibbaren Generator (4);
- mindestens einem Antriebs-Elektromotor (4); und
- einem Rotationsenergiespeicher (6) zur Spitzenbedarfsdeckung,
dadurch gekennzeichnet,
a) daß der Rotationsenergiespeicher (6) so aufgebaut ist, daß seine Drehzahl durch Zufuhr elektrischer Energie erhöhbar und durch Entnahme elektrischer Energie erniedrigbar ist;
b) daß der Rotationsenergiespeicher (6) elektrisch mit dem Generator (4) und dem mindestens einen Antriebs-Elektromotor (4) verbunden ist; und
c) daß der Antriebs-Elektromotor (4) und/oder der Rotationsenergiespeicher (6) jeweils aufweist:
- einen mit Stromleitern (10) versehenen Stator (2) und einen mit Dauermagneten (30) versehenen Läufer (32), die mit einem Spaltabstand zwischen sich angeordnet sind,
- mindestens einen, am Stator (2) vorgesehenen Sensor (38), der die Relativstellung von Stator (2) und Läufer (32) erfaßt,
- eine von dem Sensor (38) gesteuerte elektronische Schalteinrichtung (40), die bei antriebsgerechter beziehungsweise generatorgerechter Relativstellung von Stator (2) und Läufer (32) eine elektrische Verbindung zwischen den Stromleitern (10) und einer Stromquelle beziehungsweise Stromsenke herstellt.

2. Fahrzeug nach Anspruch 1,
dadurch gekennzeichnet,
daß der Bereich des Läufers (32), auf den der Sensor (38) anspricht, gegenüber den Dauermagneten (30) oder der Sensor (38) gegenüber dem Stator (2) in Richtung der Relativbewegung von Stator (2) und Läufer (32) verschiebbar ist.

3. Fahrzeug nach Anspruch 1 oder 2,
dadurch gekennzeichnet,
daß der Sensor (38) ein auf Steuermagnete, gebildet durch die Dauermagneten (30) oder durch gesonderte, auf dem verschiebbaren Bereich angeordneten Dauermagnete, ansprechender Sensor (38) ist.

4. Fahrzeug nach einem der vorhergehenden Ansprüche,
dadurch gekennzeichnet,
daß die Schalteinrichtung (40) eine Leistungssteuereinrichtung zur Steuerung der den Stromleitern (10) zugeführten oder entnommenen elektrischen Leistung aufweist.

5. Fahrzeug nach Anspruch 4,
dadurch gekennzeichnet,
daß die Leistungssteuerungeinrichtung eine Impulsbreitensteuerschaltung, eine Phasenanschnittschaltung, eine Zwischentaktungsschaltung oder eine Direktumrichterschaltung ist.

6. Fahrzeug nach einem der vorhergehenden Ansprüche,
dadurch gekennzeichnet,
daß eine elektronische Drehzahlbegrenzungsschaltung vorgesehen ist.

7. Fahrzeug nach einem der vorhergehenden Ansprüche,
dadurch gekennzeichnet,
daß der Stator (2) in mehrere Abschnitte aufgeteilt ist, denen jeweils eine Schalteinrichtung (40) zugeordnet ist.

8. Fahrzeug nach einem der vorhergehenden Ansprüche,
dadurch gekennzeichnet,
daß die Stromleiterverschaltung von Hintereinanderschaltung in Parallelschaltung und umgekehrt änderbar ist.

9. Fahrzeug nach einem der vorhergehenden Ansprüche,
dadurch gekennzeichnet,
daß die Stromleiter (10) zum Bremsen kurzschließbar sind.

10. Fahrzeug nach einem der vorhergehenden Ansprüche,
dadurch gekennzeichnet,
daß der Generator (4) einen mit Dauermagneten (30) besetzten Läufer (32) aufweist, die vorzugweise auf dem Schwungrad des Verbrennungsmotors angeordnet sind.

11. Fahrzeug nach einem der vorhergehenden Ansprüche,
dadurch gekennzeichnet, daß der Antriebs-Elektromotor (4) und/oder der Generator (4) in Außenläuferbauart ausgeführt ist.

12. Fahrzeug nach einem der vorhergehenden Ansprüche,
dadurch gekennzeichnet, daß der Antriebs-Elektromotor (4) und/oder der Generator (4) und/oder der Rotationsenergiespeicher (6) mit hochkoerzitiven Dauermagneten (30) aus einem Element aus der Gruppe der seltenen Erden, insbesondere Samarium, und Kobalt aufgebaut ist.

13. Fahrzeug nach einem der vorhergehenden Ansprüche,
dadurch gekennzeichnet, daß eine elektronische Einrichtung vorgesehen ist, mit der eine übermäßige Differenz zwischen der Umfangsgeschwindigkeit des von dem Antriebs-Elektromotor (4) angetriebenen Fahrzeugrads und der Fahrgeschwindigkeit des Fahrzeugs oder eine übermäßige Drehzahldifferenz von zwei Antriebs-Elektromotoren (4) einer Achse des Fahrzeugs verhinderbar ist.

14. Fahrzeug nach einem der vorhergehenden Ansprüche,
dadurch gekennzeichnet, daß der Antriebs-Elektromotor(4) zum Bremsen des Fahrzeugs als Generator(4) arbeitet.

## Claims

1. A vehicle comprising
- an internal combustion engine;
- a generator (4) adapted to be driven by the internal combustion engine;
- at least one drive electromotor (4); and
- a rotational energy storage (6) for covering peak requirements,
characterized in
a) that the rotational energy storage (6) is constructed such that its speed can be increased by supply of electrical energy and decreased by withdrawal of electrical energy;
b) that the rotational energy storage (6) is electrically connected to the generator (4) and the at least one drive electromotor (4); and in
c) that the drive electromotor (4) and/or the rotational energy storage (6) each comprises:
- a stator (2) provided with current conductors (10) and a rotor (32) provided with permanent magnets (30), said stator and said rotor being disposed with a gap distance therebetween,
- at least one sensor (38) provided on the stator (2) and detecting the relative position of stator (2) and rotor (32),
- an electronic switching means (40) which is controlled by the sensor (38) and which in a drive-effective or generator-effective relative position of stator (2) and rotor (32) establishes an electrical connection between the current conductors (10) and a current source or current sink, respectively.

2. A vehicle according to claim 1,
characterized in that the portion of the rotor (32), to which the sensor (38) is responsive, is slidable with respect to the permanent magnets (30) or the sensor (38) is slidable with respect to the stator (2) in the direction of relative movement of said stator (2) and said rotor (32).

3. A vehicle according to claim 1 or 2,
characterized in that the sensor (38) is a sensor (38) responsive to control magnets constituted by the permanent magnets (30) or by specific permanent magnets disposed on the slidable portion.

4. A vehicle according to any one of the preceding claims,
characterized in that the switching means (40) is a power control means for controlling the electrical power supplied to the current conductors (10) or withdrawn therefrom.

5. A vehicle according to claim 4,
characterized in that the power control means is a pulse width control circuit, a phase control circuit, an intermediate clock circuit or a direct converter circuit.

6. A vehicle according to any one of the preceding claims,
characterized in that an electronic speed limiting circuit is provided.

7. A vehicle according to any one of the preceding claims,
characterized in that the stator (2) is divided into a plurality of sections each having a switching means (40) associated therewith.

8. A vehicle according to any one of the preceding claims,
characterized in that the current conductor connection can be altered from series connection to parallel connection and vice versa.

9. A vehicle according to any one of the preceding claims,
characterized in that the current conductors (10) can be short-circuited for braking.

10. A vehicle according to any one of the preceding claims,
characterized in that the generator (4) has a rotor (32) equipped with permanent magnets (30) disposed preferably on the flywheel of the internal combustion engine.

11. A vehicle according to any one of the preceding claims,
characterized in that the drive electromotor (4) and/or the generator (4) is designed in external rotor construction.

12. A vehicle according to any one of the preceding claims,
characterized in that the drive electromotor (4) and/or the generator (4) and/or the rotational energy storage (6) is composed with highly coercive permanent magnets (30) of an element of the group of the rare earths, in particular samarium, and cobalt.

13. A vehicle according to any one of the preceding claims,
characterized in that an electronic means is provided that is adapted to prevent an excessive difference between the circumferential speed of the vehicle wheel driven by the drive electromotor (4) and the moving speed of the vehicle, or an excessive difference in rotational speed of two drive electromotors (4) of one axle of the vehicle.

14. A vehicle according to any one of the preceding claims,
characterized in that the drive electromotor (4) operates as a generator (4) for braking the vehicle.

## Revendications

1. Véhicule comprenant:
- un moteur à combustion interne;
- un générateur (4) pouvant être entraîné par le moteur à combustion interne;
- au moins un moteur électrique d'entraînement (4); et
- un accumulateur d'énergie rotationnelle (6) pour couvrir les besoins de pointe,
caractérisé en ce que
a) l'accumulateur d'énergie rotationnelle (6) est constitué de manière que sa vitesse de rotation puisse être augmentée par application d'énergie électrique et puisse être diminuée par prélèvement d'énergie électrique;
b) en ce que l'accumulateur d'énergie rotationnelle (16) est relié électriquement avec le générateur (4) et avec le au moins un moteur électrique d'entraînement (4); et
c) en ce que le moteur électrique d'entraînement (4) et/ou l'accumulateur d'énergie rotationnelle (6) comprend respectivement:
- un stator (2) muni de conducteurs de courant (10) et un rotor (32) muni d'aimants permanents (30), qui sont disposés avec un interstice entre eux,
- au moins un capteur (38) prévu sur le stator (2), qui détecte le déplacement relatif entre le stator (2) et le rotor (32),
- un dispositif de commutation électronique (40) commandé par le capteur (32), qui établit une liaison électrique entre les conducteurs de courant (10) et une source de courant ou un abaisseur de courant quand il y a une position relative entre le stator (2) et le rotor (32) correcte pour le fonctionnement en moteur ou en générateur.

2. Véhicule selon la revendication 1, caractérisé en ce que la zone du rotor (32) à laquelle répond le capteur (38) peut être déplacée par rapport aux aimants permanents (30), ou le capteur (38) par rapport à stator (2), en direction du mouvement relatif du stator (2) et du rotor (32).

3. Véhicule selon la revendication 1 ou 2, caractérisé en ce que le capteur (38) est un capteur répondant à des aimants de commande formés par les aimants permanents (30) ou par des aimants permanents particuliers disposés dans la zone qui peut être déplacée.

4. Véhicule selon l'une quelconque des revendications précédentes, caractérisé en ce que le dispositif de commutation (40) comprend un dispositif de commande de puissance pour commander la puissance électrique appliquée aux conducteurs de courant (10) ou prélevée de ceux-ci.

5. Véhicule selon la revendication 4, caractérisé en ce que le dispositif de commande de puissance est constitué par un circuit de commande de largeur d'impulsions, un circuit de coupure de phases, un circuit intermédiaire d'horloge ou un circuit convertisseur direct.

6. Véhicule selon l'une quelconque des revendications précédentes, caractérisé en ce qu'il est prévu un circuit électronique de limitation de vitesse rotationnelle.

7. Véhicule selon l'une quelconque des revendications précédentes, caractérisé en ce que le stator (2) est subdivisé en plusieurs sections à chacune desquelles est associé un dispositif de commutation (40).

8. Véhicule selon l'une quelconque des revendications précédentes, caractérisé en ce que le câblage des conducteurs de courant peut être modifié entre un circuit série et un circuit parallèle, et inversement.

9. Véhicule selon l'une quelconque des revendications précédentes, caractérisé en ce que les conducteurs de courant (10) peuvent être court-circuités pour un freinage.

10. Véhicule selon l'une quelconque des revendications précédentes, caractérisé en ce que le générateur (4) comprend un rotor (32) équipé d'aimants permanents (30), qui sont montés de préférence sur le volant du moteur à combustion interne.

11. Véhicule selon l'une quelconque des revendications précédentes, caractérisé en ce que le moteur électrique d'entraînement (4) et/ou le générateur (4) est constitué sous la forme d'un rotor extérieur.

12. Véhicule selon l'une quelconque des revendications précédentes, caractérisé en ce que le moteur électrique d'entraînement (4) et/ou le générateur (4) et/ou l'accumulateur d'énergie rotationnelle (6) à aimants permanents fortement coercitifs (30) est constitué en un élément choisi dans le groupe des terres rares, et notamment en samarium et en cobalt.

13. Véhicule selon l'une quelconque des revendications précédentes, caractérisé en ce qu'il est prévu un dispositif électronique permettant d'éviter une différence exagérée entre la vitesse périphérique de la roue du véhicule entraîné par le moteur électrique d'entraînement (4) et la vitesse du véhicule, ou une différence de vitesse de rotation exagérée entre deux moteurs électriques d'entraînement (4) d'un essieu du véhicule.

14. Véhicule selon l'une quelconque des revendications précédentes, caractérisé en ce que le moteur électrique d'entraînement (4) fonctionne en tant que générateur (4) pour freiner le véhicule.
